(19) Europäisches Patentamt
European Patent Office
Office européen des brevets

(11) EP 0 327 376 B2

(12) NEW EUROPEAN PATENT SPECIFICATION

(45) Date of publication and mention of the opposition decision:
**14.01.1998 Bulletin 1998/03**

(45) Mention of the grant of the patent:
**27.04.1994 Bulletin 1994/17**

(21) Application number: **89301050.4**

(22) Date of filing: **03.02.1989**

(51) Int Cl.6: **C08F 218/04**, C09D 131/02
// (C08F218/04, 230:08)

(54) **Vinyl polymers**

Vinylpolymere

Polymères vinyliques

(84) Designated Contracting States:
**AT BE CH DE ES FR GR IT LI LU NL SE**

(30) Priority: **05.02.1988 GB 8802616**

(43) Date of publication of application:
**09.08.1989 Bulletin 1989/32**

(73) Proprietor: **HARLOW CHEMICAL COMPANY LIMITED**
**Harlow Essex CM20 2AH (GB)**

(72) Inventors:
- **Brown, George Reginald**
  **Brentwood Essex (GB)**
- **Mahil, Mahinder Singh**
  **Bishops Stortford Hertfordshire (GB)**
- **Cruden, John McNab**
  **Harlow Essex (GB)**

(74) Representative: **Darby, David Thomas et al**
**Abel & Imray**
**Northumberland House**
**303-306 High Holborn**
**London WC1V 7LH (GB)**

(56) References cited:
**DE-A- 2 148 457**
**FR-A- 2 057 376**
**GB-A- 1 407 827**
**US-A- 3 814 716**

- **CHEMICAL ABSTRACTS, vol. 99, no. 24, December 1983, page 16, abstract no. 195634j, Columbus, Ohio, US; & JP-A-58 079 003**

EP 0 327 376 B2

## Description

This invention relates to vinyl polymers, more especially to vinyl copolymer dispersions and their use in the manufacture of emulsion paints.

The use of compounds of silicon, especially silanes, as agents to modify the properties of aqueous vinyl polymer dispersions has been disclosed, for example, in British Patent Specification No. 1,407,872, where there are described copolymers comprising units derived inter alia from one or more vinyl esters of carboxylic acids having from 2 to 18 carbon atoms and from 0.3 to 5% by weight, relative to the aforementioned units, of units derived from a hydrolysable silicon compound. Also described is a process for the manufacture of an aqueous dispersion of such a copolymer in which polymerization of the vinyl ester is commenced in the absence of the silicon compound, the latter being metered in during the course of the polymerization. This procedure is said to be necessary because the presence of silicon compound from the start of polymerization leads to coagulation of the dispersion during polymerization. In the polymers described in the Examples of the patent, the silicon monomer is present in a proportion in the range of from 1 to 2.5%, based on the weight of the vinyl ester, e.g. in Example 1, 35 g of silane are copolymerized with 3500 g of vinyl acetate.

It has now surprisingly been found that an emulsion paint having a high scrub resistance may be made from a dispersion of a vinyl ester/silicon compound copolymer having very low levels of silicon compound, based on the weight of vinyl ester.

It has also surprisingly been found that, contrary to the teaching of British Patent No. 1,407,827, it is possible to make vinyl ester/silicon compound copolymers in the form of coagulate-free dispersions with at least some silicon compound being present in the reaction mixture from the very start of the polymerization.

The silicon compound used in the present invention, which compound will be referred to subsequently herein as the silicon monomer, is preferably a compound of the formula

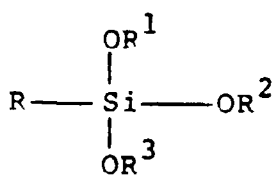

wherein R represents a radical having a reactive group, advantageously an ethylenic double bond, enabling the silicon compound to copolymerize with an ethylenically unsaturated monomer, and $R^1$, $R^2$, and $R^3$ each independently represent a hydrogen atom, an acyl radical, an unsubstituted alkyl radical, or an alkoxy-substituted alkyl radical, subject to the proviso that at most two of $R^1$, $R^2$ and $R^3$ represent hydrogen. Mixtures of two or more such compounds may be used. These compounds are hydrolysable, and it is believed that during polymerization a substantial proportion of any alkoxy or acyloxy groups in the monomer will be hydrolysed so that the resulting copolymer will contain hydroxy groups but, particularly when there are three such groups in the molecule, total hydrolysis may not occur and is not necessary.

The radical R is preferably an organic radical, and the reactive group may be, for example, a mercapto group, which will be incorporated by a free radical mechanism, or an oxirane, which may react with a carboxyl group of, for example, an acrylic acid comonomer. Preferably, however, the reactive group is an ethylenic double bond.

Examples of suitable silicon monomers are vinyl trimethoxy silane, methacryloxyethyl trimethoxy silane, and mercaptopropyl trimethoxy silane.

According to a first aspect of the present invention, there is provided a process for the manufacture of a polymer dispersion, which comprises copolymerizing in an aqueous phase, in the presence of an emulsifier, a protective colloid, or both emulsifier and colloid, and of a free radical initiator,

(a) a vinyl ester of a carboxylic acid having from 2 to 18 carbon atoms, and optionally a copolymerizable monomer other than a silicon monomer, and
(b) up to 0,4%, advantageously less than 0.3%, by weight, based on the total weight of component (a), of a silicon monomer,

at least a proportion of component (b) being present at the commencement of polymerization, the said vinyl ester constituting at least 40% by weight, advantageously at least 70%, of the polymerizable monomer mixture. Advantageously, the said proportion is introduced substantially simultaneously with the initial charge of component a) to the aqueous polymerization medium, preferably being added in admixture with component (a).

According to a second aspect of the invention, there is provided an emulsion copolymer containing units derived

from

(a) a vinyl ester of a carboxylic acid having from 2 to 18 carbon atoms, and optionally a copolymerizable monomer other than a silicon monomer, and
(b) less than 0.25% by weight, and preferably less than 0.2% by weight, based on the weight of units derived from component (a), of units derived from a silicon monomer,

units derived from the said vinyl ester constituting at least 40% by weight, advantageously at least 70%, of the copolymer.

Advantageously, the units derived from the silicon monomer are distributed throughout the length of the copolymer chain.

According to a third aspect of the invention, there is provided an emulsion copolymer containing (a) units derived from vinyl acetate, optionally units derived from a monomer, other than a silicon monomer, copolymerizable therewith and (b) units derived from a silicon monomer, the weight of units (b) being less than 0.25% of the weight of units (a), units derived from vinyl acetate constituting at least 40%, advantageously at least 70%, by weight of the copolymer. Advantageously the units (b) are distributed throughout the length of the copolymer chain.

Since the degree of the hydrolysis of the silicon monomer during polymerization may vary, the weight percentage of silicon-containing units in the product is calculated on the assumption that complete hydrolysis has taken place. For example, when vinyl trimethoxy silane is the silicon monomer, it is assumed that the resulting units are of the formula:

$$-CH_2-CH(-)-Si(OH)_3$$

The invention further provides the copolymer dispersion produced by the process of the first aspect, and an emulsion paint made therefrom. The invention still further provides a dispersion comprising the copolymer of the second or third aspect, and an emulsion paint made therefrom.

More especially, the invention provides an emulsion paint comprising as polymeric binder a copolymer of vinyl acetate, optionally a copolymerizable monomer other than a silicon monomer, and from 0.03% to 0.4%, based on the total weight of polymer, of a silicon monomer, units derived from vinyl acetate constituting at least 40%, advantageously at least 70%, by weight of the copolymer. Units derived from the silicon monomer are advantageously present in a proportion of 0.05 to 0.25%, based on the weight of the copolymer. Advantageously, units derived from the silicon monomer are distributed throughout the length of the polymer chain. Advantageously, also, the proportion of silicon monomer used is within the range of 0.2 to 0.4%.

It has surprisingly been found that the pigment binding power of the polymer, as measured by the scrub resistance of an emulsion paint comprising it, is at its maximum when the silicon monomer is used in the 0.2 to 0.4% range, is somewhat below the maximum at 0.6% and is in serious decline at levels of 0.8% and above. Bearing in mind the relatively high cost of the silicon monomers, their use at levels below about 0.75 to 0.8% in the manufacture of polymer binders for emulsion paints is doubly productive in that it leads to a simultaneous improvement in performance and reduction in cost. The precise optimum level will of course vary somewhat with different silicon monomers and other variables in formulation, for example pigment volume content (PVC)

In accordance with the first and second aspects of the present invention, the vinyl ester is an ester of a carboxylic acid with from 2 to 18 carbon atoms, and a mixture of two or more such esters may be used, as may a mixture of one or more such esters with a copolymerizable monomer, especially other ethylenically unsaturated monomers. The vinyl ester is advantageously vinyl propionate or, preferably, vinyl acetate. Mixtures of vinyl acetate and propionate are preferred monomer mixtures. As other vinyl ester monomers there may be mentioned vinyl esters of $C_4$ to $C_{18}$ monocarboxylic acids, particularly the vinyl esters of mixed $C_9$ or $C_{10}$ tertiary carboxylic acids available commercially as VeoVa 9 and VeoVa 10 (VeoVa is a trade mark); as monomers other than such vinyl esters there may be mentioned esters of acrylic acid with monohydric alcohols of 1 to 18 carbon atoms, especially butyl acrylate and 2-ethylhexyl acrylate; di-esters of maleic or fumaric acid with monohydric alcohols of 1 to 18 carbon atoms, especially dibutyl maleate and di(2-ethylhexyl)maleate; ethylene, isobutylene and linear alpha olefins with from 4 to 18 carbon atoms or vinyl chloride. Copolymers of a vinyl ester, especially of vinyl acetate, with ethylene and vinyl chloride are especially suitable.

These monomers mentioned above that are vinyl esters of C4 to C18 carboxylic acids may be used alone as component (a) or as comonomers; the other monomers, especially butyl acrylate, are suitable as comonomers.

The proportion of comonomer or monomers used with vinyl acetate or vinyl propionate will depend on which particular monomers are used. However, the proportions required are desirably chosen to give a polymer composition with a glass transition temperature in the range of -20°C to +40°C, preferably -10°C to +30°C.

The vinyl ester of a carboxylic acid with from 2 to 18 carbon atoms is advantageously present in the monomer mixture in a proportion of at least 50%, preferably at least 70% and most preferably at least 75%, by weight. Exceptionally, when component (a) comprises vinyl acetate, ethylene, and vinyl chloride, vinyl chloride is treated as if it were a specified vinyl ester, i.e., vinyl acetate and chloride together must constitute at least 40%, vinyl acetate itself advantageously constituting at least 40%, by weight of the monomers.

In addition to those comonomers which form the bulk of the resin composition, others may be included to confer specific properties upon the polymer composition. These may include monomers that enhance the stability of the polymer dispersion; monomers that give improved adhesion to various substrates; monomers that provide sites for cross-linking reactions and monomers with two or more copolymerizable double bonds which serve to increase the overall molecular weight of the polymer.

Examplary of these different classes of monomers desirably present in minor proportions are acrylic, itaconic and crotonic acids and the monoesters of maleic and fumaric acids with monohydric alcohols having 1 to 8 carbon atoms, sodium vinyl sulphonate and the sodium salt of acrylamido propane sulphonic acid; unsaturated esters of acetoacetic acid; 2-hydroxyethyl acrylate and 2-hydroxypropyl acrylate; acrylamide and N-methylol acrylamide; ethylene glycol diacrylate; ethylene glycol dicrotonate; hexylene glycol diacrylate; trimethylol propane triacrylate; diallyl maleate and triallyl cyanurate.

Advantageously, the polymers and polymer dispersions of the invention are made under polymerization conditions suitable for the manufacture of conventional vinyl polymers, especially emulsion polymerization, many such procedures being known or conventional in the art.

More especially, the process is advantageously carried out in the presence of a stabilizer for emulsion polymerization, many of which are conventional such, for example, as protective colloids and nonionic or anionic surfactants.

Of the protective colloids, preferred are the water soluble cellulose derivatives such, for example, as sodium carboxymethyl cellulose, hydroxypropyl cellulose and, especially, hydroxyethyl cellulose; partially hydrolysed polyvinyl alcohols and poly N-vinyl amides such, for example, as poly N-vinyl pyrrolidone and poly N-vinyl, N-methyl acetamide. Other water soluble polymers, for example, starch ethers and homopolymers or copolymers of acrylic and methacrylic acid, may be used, but are less preferred.

Nonionic surfactants suitable for use in the process of the invention include, for example, the condensates of ethylene oxide with straight or branched chain alcohols of from 8 to 18 carbon atoms, with alkyl phenols or with carboxylic acids of from 8 to 18 carbon atoms. The block copolymers of propylene oxide and ethylene oxide are also suitable.

Suitable anionic surfactants include, for example, alkyl sulphates and sulphonates; alkyl aryl sulphates; sulphates or phosphates of ethylene oxide condensates with alkyl alcohols or alkyl phenols; and mono- and di-esters of sulphosuccinic acid.

Polymerization is carried out in the presence of a free radical initiator. The initiators in general may be used without activators or in the presence of a reducing agent such, for example, as sodium bisulphite, sodium formaldehyde sulphoxylate, or of a salt of iron, cobalt or copper. Preferred initiators include, preferably inorganic persulphates, such, for example, as potassium or ammonium persulphates optionally in the presence of a reducing agent, potassium perphosphate or hydrogen peroxide, which is preferably used in the presence of a sulphur-based reducing agent. Organic hydroperoxides such, for example, as t-butyl hydroperoxide or cumene hydroperoxide may also be used, conveniently with reducing agents such as those mentioned above; such initiators are, however, less preferred.

Polymerization may be carried out at any temperature within the range of from 0°C to 100°C, but the range of 40°C to 90°C is convenient and preferred.

In addition to these major components of the polymerization formulation, other materials, for example, pH buffering agents, chain transfer agents and antifoams may be present.

Although the novel products of the present invention have a wide variety of uses, they are especially useful as the binder component of an emulsion paint. In that field, they have general application, that is to say, they are not dependent for their general advantages on any particular formulation, although they may have special advantages in certain formulations. Many such formulations, with respect to components and their proportions are known in the art; they may contain, for example, titanium dioxide; inorganic fillers such, for example, as whiting, dolomite, talc, barytes or silica; thickeners such, for example, as water soluble cellulose derivatives, polyvinyl alcohol, water- and alkali-soluble acrylic copolymers, and polyvinyl amides; pigment dispersants such, for example, as Tetron, Calgon, Orotan 731, Dispex N40 (trade marks); antifoams, surfactants, and bactericides.

The following Examples illustrate the invention; unless otherwise indicated, all parts and percentages are by weight. "Cellobond", "Antarox", "Arylan", "Bevaloid", "Hercules", "Tioxide", "Speswhife" "Snowcal", "Natrosol", "Orotan", "Texanol", "Lankropol", "Arkopal", "Mowiol", "Synperonic" and "Aerosol" are trade marks. Examples 1, 9, 14, 19, 24, 26, 28, 30, 32 and 37 are by way of comparison, the formulations containing no silicon monomer. Examples 5, 6, 7, 8, 13, 17, 18, 22, 23, 35, 36, 40 and 41 are also comparative, formulations containing more silicon monomer than required by the invention.

Example 1

| Reaction Medium-A | |
|---|---|
| Cellobond 09T - hydroxyethyl cellulose | 0.65 |
| Antarox CO880 - nonyl phenyl ethylene oxide condensate | 0.60 |
| Arylan SC30 - sodium dodecyl benzene sulphonate | 0.70 |
| Sodium Acetate | 0.05 |
| Bevaloid 581B - antifoam | 0.07 |
| Water | 37.00 |
| **Reactant Charge-B** | |
| Vinyl Acetate | 43.20 |
| VeoVa 10 | 9.00 |
| di-iso Butyl Phthalate | 1.00 |
| **Initiator Charge-C** | |
| Water | 0.95 |
| Potassium Persulphate | 0.05 |
| **Surfactant/Initiator Charge-D** | |
| Water | 5.00 |
| Antarox CO880 | 0.60 |
| Potassium Persulphate | 0.15 |
| **Redox Catalyst-E** | |
| t-Butyl Hydroperoxide | 0.03 |
| Sodium Formaldehyde Sulphoxylate | 0.03 |
| Water | 0.27 |
| **Alkali & Antifoam-F** | |
| 0.910 Ammonia | 0.10 |
| Water | 0.45 |
| Hercules Defoamer 1512 | 0.10 |
| | 100.00 |

The reaction medium (A), comprising a solution of Cellobond, surfactants and buffer, was charged to a reaction vessel fitted with an agitator and means of temperature control. 10% of Reactant Charge (B), the mixed monomers, was added to the reaction vessel and the reaction mixture heated to 55°C, at which temperature Initiator Charge (C), the first part of the potassium persulphate initiator, was added.

The reaction mixture was then heated to 80°C and maintained at this temperature for 30 minutes to allow the completion of the initial polymerization. At the end of this period addition of the remainder of Reactant Charge B and Charge D, initiator solution, was commenced, the temperature being held at 80°C. The additions were completed in five hours and the temperature held at 80°C for a further hour.

The emulsion was then cooled to room temperature and the redox catalysts (Charge E) added followed by Charge F, the alkali and antifoam.

Examples 2-8

The procedures of Example 1 were followed except that Silane A171, vinyl trimethoxy silane, in various proportions was used (0.1%, 0.2%, 0.4%, 0.5%, 0.8%, 1.0% and 1.5% with corresponding reductions in the level of vinyl acetate).

The following emulsion properties were obtained for these eight examples:

| Example z | 1 | 2 | 3 | 4 | 5 | 6 | 7 | 8 |
|---|---|---|---|---|---|---|---|---|
| Solids Content % | 55.0 | 54.6 | 55.4 | 55.1 | 54.8 | 55.6 | 54.6 | 54.6 |

(continued)

| Example z | 1 | 2 | 3 | 4 | 5 | 6 | 7 | 8 |
|---|---|---|---|---|---|---|---|---|
| Viscosity (Brookfield RVT 4/20, in cp.) | 3200 | 3300 | 2100 | 2500 | 4000 | 1500 | 1900 | 700 |
| Particle size (nm) | 310 | 315 | 320 | 310 | 315 | 320 | 380 | 400 |

These emulsions were made into paints at a range of pigment volume concentrations, using a pigment dispersion of the following composition:

| | |
|---|---|
| Tioxide RHD2 - titanium dioxide | 200 |
| Speswhite - Kaolin clay | 100 |
| Snowcal 7ml - Whiting | 200 |
| Natrosol 250 MR (solution) - hydroxyethyl cellulose | 200 |
| Orotan 850 - anionic dispersant | 6 |
| Tetrasodium Pyrophosphate (5% solution) | 25 |
| 0.910 Ammonia solution | 1 |
| Antifoam | 2 |
| Bactericide | 1 |
| Texanol - coalescing solvent | 12 |
| Water | 253 |

The paints were made by adding sufficient of the experimental copolymer emulsions to give the appropriate pigment volume concentration.

For testing, the paints were applied on black poly(vinyl chloride) foil to give a dry film thickness of approximately 25 µm. The paints were dried overnight at ambient temperature and were then evaluated for wet scrub resistance using an R.E.L. scrub tester. With paints of up to 70% pigment volume concentration a loading of 900 g was placed on each brush; at 75% this was reduced to 600 g and at 80% and 85% it was reduced further to 300 g. The panels were weighed before and after the scrub test and the pigment binding power assessed by measuring the weight of paint removed.

The results for Examples 1 to 8 were as follows:

| Example | Silane Level | Weight loss in mg | |
|---|---|---|---|
| | | 60% PVC | 75% PVC |
| 1 | --- | 272 | 1356 |
| 2 | 0.1 | 55 | 690 |
| 3 | 0.2 | 48 | 360 |
| 4 | 0.4 | 26 | 103 |
| 5 | 0.5 | 44 | 523 |
| 6 | 0.8 | 40 | 500 |
| 7 | 1.0 | 49 | 954 |
| 8 | 1.5 | 561 | 1145 |

These examples show clearly that a low level of silane addition is sufficient for a marked improvement in pigment binding power; that an optimum performance is obtained at an addition level of about 0.4% in the particular formulation chosen and that the wet scrub resistance falls as higher levels of silane are used.

Example 9

| Reaction Medium-G | |
|---|---|
| Natrosol 250L | 0.80 |
| Lankropol K02 - sodium dioctyl succinate | 0.40 |
| Arylan SC30 | 0.40 |
| Antarox CO880 | 2.00 |

(continued)

| Reaction Medium-G | |
|---|---|
| Sodium Bicarbonate | 0.10 |
| Water | 40.00 |
| Reactant Charge-H | |
| Vinyl Acetate | 40.00 |
| Butyl Acrylate | 10.00 |
| First Initiator Charge-J | |
| Potassium Persulphate | 0.05 |
| Water | 0.95 |
| Second Initiator Charge-K | |
| Potassium Persulphate | 0.10 |
| Sodium Bicarbonate | 0.10 |
| Water | 5.10 |
| | 100.00 |

The Reaction Medium-G, a solution of Natrosol, the surfactants and sodium bicarbonate, was charged to the reactor and heated to 55°C, at which temperature 10% of the Reactant Charge H, the mixed monomers, were added and dispersed. The first solution of potassium persulphate was added at 60°C and the temperature raised to 70°C, at which it was held for 30 minutes before the start of the addition of the remainder of Charge H and the Second Initiator Charge K, an initiator/buffer solution. The delayed additions were completed in 5 hours and the polymer latex held at 70°C for a further hour before cooling.

Examples 10, 11, 12, 13

These were identical to Example 9 save for the replacement of differing proportions of vinyl acetate with Silane A174 methacryloxyethyl trimethoxy silane.

The percentages of total monomer replaced by silane, and the resulting physical properties of the emulsions, were as follows:

| Example | % Silane | Total Solids % | Brookfield Viscosity Poise | Particle Size (nm) |
|---|---|---|---|---|
| 9 | 0.0 | 53.2 | 22 | 370 |
| 10 | 0.1 | 53.3 | 21 | 450 |
| 11 | 0.2 | 52.0 | 22 | 420 |
| 12 | 0.4 | 53.2 | 23 | 430 |
| 13 | 0.8 | 53.0 | 15 | 390 |

These emulsions were used in the preparation of paints at 70%, 75% and 80% pigment volume concentration and scrubbed as before with the following results.

| Example | Silane level,% | Paint Weight Loss (mg) | | |
|---|---|---|---|---|
| | | 70% PVC | 75% PVC | 80% PVC |
| 9 | 0.0 | 27 | 22 | 37 |
| 10 | 0.1 | 5 | 4 | 9 |
| 11 | 0.2 | 5 | 3 | 3 |
| 12 | 0.4 | 4 | 3 | 3 |
| 13 | 0.8 | 6 | 3 | 10 |

In this series the fall-off in scrub resistance at 0.8% addition level is quite small, but the beneficial effect of the use of levels as low as 0.1% is clearly shown.

Example 14

The formulation and procedure for this example were identical to those for Example 9 save that the butyl acrylate comonomer was replaced with VeoVa 10, the vinyl ester of mixed tertiary $C_{10}$ acids.

Examples 15, 16, 17, 18

These were modifications of Example 14 replacing various proportions of vinyl acetate by mercaptopropyl trimethoxy silane.

The percentages of total monomer represented by silane and the resulting physical properties of the emulsions, were as follows:

| Example | % Silane | Total Solids % | Brookfield Viscosity Poise | Particle Size (nm) |
|---|---|---|---|---|
| 14 | 0.0 | 54.2 | 38 | 335 |
| 15 | 0.2 | 53.4 | 34 | 340 |
| 16 | 0.4 | 54.4 | 38 | 295 |
| 17 | 0.7 | 52.6 | 12 | 397 |
| 18 | 1.5 | 53.1 | 34 | 360 |

These emulsions were used in the preparation of paints at 70%, 75% and 80% pigment volume concentration and scrubbed with the following results:

| Example | Silane level,% | Paint Weight Loss (mg) | | |
|---|---|---|---|---|
| | | 70% PVC | 75% PVC | 80% PVC |
| 14 | 0.0 | 62 | 62 | 25 |
| 15 | 0.2 | 15 | 8 | 10 |
| 16 | 0.4 | 16 | 5 | 10 |
| 17 | 0.7 | 37 | 14 | 8 |
| 18 | 1.5 | 48 | 29 | 31 |

In these examples the improvement in scrub resistance effected by the inclusion of a low level of silane and the lower effectiveness of higher levels are demonstrated.

Example 19

The procedure for this example differs from that of earlier examples as it involves the copolymerization of ethylene at high pressure.

The following were charged to a stirred, heated reaction vessel.

| | |
|---|---|
| Water | 10,700 g |
| Sodium Acetate Trihydrate | 142 g |
| 20% Arkopal N300 - nonyl phenyl ethylene oxide condensate | 1,760 g |
| 5% Tylose H10 | 13,700 g |
| 30% Sodium Vinyl Sulphonate | 572 g |
| 1% Ferrous Sulphate Heptahydrate | 34.3 g |

The reactor was then thoroughly purged with nitrogen to remove oxygen and was charged with ethylene to a pressure of 20 atmospheres (20,3 bar).

5,900 g of vinyl acetate was next charged to the reactor with 10% of a solution of 27.1 g sodium formaldehyde sulphonate in 2,000 g of water. The charge was heated to 60°C and the ethylene pressure raised to 40 atmospheres. At this point 10% of the initiator solution of 27.1 g of t-butyl hydroperoxide was added. The temperature of the charge was held at 60°C and at this temperature 24,600 g of vinyl acetate, the remainder of the sodium formaldehyde sulphonate and t-butyl hydroperoxide solutions were added over 4 hours, the ethylene pressure being maintained at 40 atmospheres. A solution of 34 g of sodium persulphate in 800 g water was then added to the reactor and the charge

temperature raised to 80°C to complete the reaction. The charge was then degassed and the greater part of the unreacted ethylene removed. Two litres of water were then added to the charge which was held at 80°C under partial vacuum for two hours. During this period the remainder of the unreacted monomer was distilled off with about 2 litres of water.

The polymer latex formed was adjusted to 55% solids and a viscosity of about 500 centipoise.

Examples 20-23

These were identical in procedure to Example 19 save that the polymer was modified by the replacement of various proportions of the vinyl acetate by Silane A171 (vinyl trimethoxy silane).

These emulsions were used to prepare paints at 70, 75 and 80% pigment volume concentration and scrubbed as before. The percentages of silane, by weight of vinyl acetate, and the results obtained in terms of weight loss of paint were as follows:

| Example | Silane level,% | Weight of Paint Removed | | |
|---|---|---|---|---|
| | | 70% PVC | 75% PVC | 80% PVC |
| 19 | 0.0 | 865 | 530 | 585 |
| 20 | 0.1 | 695 | 105 | 75 |
| 21 | 0.2 | 220 | 90 | 125 |
| 22 | 0.5 | 110 | 85 | 120 |
| 23 | 1.0 | 720 | 340 | 830 |

In these examples the beneficial effects of low levels of silane and the fall-off in effectiveness at higher levels are again seen.

Examples 24-31

These examples demonstrate that enhanced pigment binding power obtained by the use of low levels of silane monomers is unaffected by changes in the colloid stabilizer system.

All are based on the formulation of Example 9 but, as with Example 14, the butyl acrylate in the monomer charge is replaced by Veova 10. Example 24 is substantially a rerun of Example 14, while Example 25 is the same emulsion with 0.2% vinyl trimethoxy silane in the monomer charge.

Examples 26, 28 and 30 are identical to 24 save that the Natrosol 250L is replaced by Mowiol 8-88 (polyvinyl alcohol), Gum Arabic and polyvinyl pyrrolidinone (PVP K30). Examples 27, 29 and 31 are as 26, 28 and 30 but with the addition of 0.2% vinyl trimethoxy silane in the monomer charge. The details and properties of these products were as follows:

| Example | Colloid | Silane,% | TSC | Viscosity RVT 4/20 Poise | Particle Size (nm) |
|---|---|---|---|---|---|
| 24 | Natrosol 250L | --- | 54.2% | 38 | 335 |
| 25 | Natrosol 250L | 0.2 | 54.0% | 35 | 300 |
| 26 | Mowiol 8-88 | --- | 54.0% | 44 | 200 |
| 27 | Mowiol 8-88 | 0.2 | 54.3% | 40 | 205 |
| 28 | Gum Arabic | --- | 55.1% | 6 | 260 |
| 29 | Gum Arabic | 0.2 | 54.2% | 4 | 255 |
| 30 | PVP K30 | --- | 54.2% | 12 | 230 |
| 31 | PVP K30 | 0.2 | 54.4% | 13 | 250 |

These emulsions were used to prepare paints at 70, 75 and 80% pigment volume concentration which were evaluated for scrub resistance as before. The results in mg of paint lost during scrubbing, were as follows:

| Example | Silane level,% | Weight loss after scrubbing, mg | | |
|---|---|---|---|---|
| | | 70% PVC | 75% PVC | 80% PVC |
| 24 | --- | 12 | 10 | 10 |

(continued)

| Example | Silane level,% | Weight loss after scrubbing, mg | | |
|---|---|---|---|---|
| | | 70% PVC | 75% PVC | 80% PVC |
| 25 | 0.2 | 4 | 3 | 4 |
| 26 | --- | 37 | 12 | 12 |
| 27 | 0.2 | 4 | 3 | 3 |
| 28 | --- | 34 | 39 | 35 |
| 29 | 0.2 | 8 | 23 | 18 |
| 30 | --- | 6 | 15 | 10 |
| 31 | 0.2 | 3 | 3 | 4 |

Examples 32-36

These again employed the same stabilizer as Example 9, but the basic monomer composition was 50% vinyl acetate, 50% vinyl propionate in Example 32, modified by the addition of 0.2%, 0.4%, 0.7% and 1.0% of vinyl trimethoxy silane in Examples 33, 34, 35 and 36 respectively.

The emulsions were made into paints and evaluated as previously described. The following results were obtained.

| Example | Silane level,% | TSC % | Viscosity RVT 4/20 poise | Particle Size, nm | Paint Weight Loss (mg) | | |
|---|---|---|---|---|---|---|---|
| | | | | | 70% PVC | 75% PVC | 80%PV |
| 32 | 0.0 | 54.1 | 20 | 315 | 73 | 74 | 67 |
| 33 | 0.2 | 55.0 | 14 | 350 | 14 | 11 | 20 |
| 34 | 0.4 | 55.0 | 9 | 350 | 7 | 7 | 7 |
| 35 | 0.7 | 53.7 | 5 | 460 | 9 | 10 | 9 |
| 36 | 1.0 | 53.0 | 5 | 440 | 17 | 6 | 10 |

These results again demonstrate the improvement in pigment binding power obtained by the use of the low levels of silane and the decline in the performance as the level is increased beyond an optimum, about 0.4% in this case.

Example 37

The following were charged to a polymerization reactor provided with a stirrer and external heating and cooling.

| | |
|---|---|
| Water | 20.00 |
| Aerosol MA (80%) - sodium dihexyl sulphosuccinate | 0.05 |
| Potassium Persulphate | 0.05 |
| Sodium Bicarbonate | 0.05 |

In a separate stirred vessel a pre-emulsion was prepared of the following composition:

| | |
|---|---|
| Vinyl Acetate | 37.125 |
| VeoVa | 12.500 |
| Acrylic Acid | 0.375 |
| Aerosol MA (80%) | 0.09 |
| Synperonic NP20 - nonyl phenyl ethylene oxide condensate | 1.00 |
| Water | 22.00 |

An initiator solution was also prepared of the following composition:

| | |
|---|---|
| Water | 4.50 |
| Potassium Persulphate | 0.15 |

(continued)

| | |
|---|---|
| Sodium Bicarbonate | 0.15 |

The initial reactor charge was heated to 80°C and at this temperature the monomer pre-emulsion and the catalyst solution were added to the reactor over a period of four hours. At the end of this period there was added a further initiator solution of:

| | |
|---|---|
| Potassium Persulphate | 0.05 |
| Water | 0.95 |

The charge was held at 80°C for a further 2 hours then cooled and adjusted to pH with 0.910 ammonia solution.

Examples 38-41

These were identical to Example 37 save for the incorporation of vinyl trimethoxy silane at levels of 0.2%, 0.4%, 0.7%, and 1.0% of the monomer charge.

The emulsion results and the scrub values obtained with paints based on these products were as follows:

| Example | Silane level,% | TSC % | Viscosity RVT 4/20 cp | Particle Size, nm | Paint Weight Loss (mg) | | |
|---|---|---|---|---|---|---|---|
| | | | | | 70% PVC | 75% PVC | 80%PV |
| 37 | 0.0 | 50.5 | 240 | 260 | 55 | 62 | 63 |
| 38 | 0.2 | 55.0 | 200 | 250 | 10 | 5 | 5 |
| 39 | 0.4 | 49.0 | 100 | 218 | 8 | 7 | 7 |
| 40 | 0.7 | 47.0 | 100 | 178 | 6 | 4 | 5 |
| 41 | 1.0 | 47.0 | 100 | 232 | 12 | 6 | 6 |

In this set of results the improvement in scrub resistance with the use of low levels of silane is clearly seen as is the fall off in performance at the highest levels of addition.

**Claims**

**1.** A process for the manufacture of a polymer dispersion, which comprises copolymerizing in an aqueous phase, in the presence of an emulsifier, a protective colloid, or both emulsifier and colloid, and of a free radical initiator,

(a) a vinyl ester of a carboxylic acid having from 2 to 18 carbon atoms, and optionally a copolymerizable monomer other than a silicon monomer, and

(b) up to 0.4%, advantageously less than 0.3%, by weight, based on the total weight of component (a), of a silicon monomer, at least a proportion of component (b) being present at the commencement of polymerization, the said vinyl ester constituting at least 40%, advantageously at least 70%, by weight of the polymerizable monomer mixture.

**2.** A process as claimed in claim 1, wherein the said proportion is introduced substantially simultaneously with the initial charge of component (a), advantageously in admixture therewith, to the aqueous polymerization medium.

**3.** A process as claimed in claim 1 or claim 2, wherein the vinyl ester is vinyl acetate.

**4.** A process as claimed in any one of claims 1 to 3, wherein a mixture of vinyl esters, advantageously vinyl acetate and vinyl propionate, or vinyl acetate and a vinyl ester of mixed tertiary $C_{10}$ carboxylic acids, is used.

**5.** A process as claimed in any one of claims 1 to 4, wherein component (a) comprises one or more copolymerizable monomers and the said monomer is or monomers are butyl acrylate, ethylene, or ethylene and vinyl chloride.

**6.** A process as claimed in any one of claims 1 to 5, wherein the silicon monomer is a compound of the formula

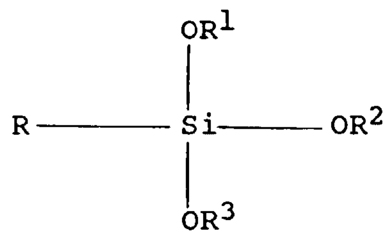

wherein R represents a radical having a reactive group, advantageously an ethylenic double bond, enabling the silicon compound to copolymerize with an ethylenically unsaturated monomer, and $R^1$, $R^2$, and $R^3$ each independently represent a hydrogen atom, an acyl radical, or an unsubstituted or alkoxy-substituted alkyl radical, subject to the proviso that at most two of $R^1$, $R^2$ and $R^3$ represent hydrogen, the silicon monomer advantageously being vinyl trimethoxy silane, methacryloxyethyl trimethoxy silane or mercaptopropyl trimethoxy silane.

**7.** A process as claimed in any one of claims 1 to 6, carried out in the presence of an inorganic persulphate.

**8.** An emulsion copolymer containing units derived from

(a) a vinyl ester of a carboxylic acid having from 2 to 18 carbon atoms, and optionally a copolymerizable monomer other than a silicon monomer, and
(b) less than 0.25% by weight, based on the weight of units derived from component (a), of units derived from a silicon monomer,

units derived from the said vinyl ester constituting at least 40%, advantageously at least 70%, by weight of the copolymer.

**9.** A copolymer as claimed in claim 8 wherein the units derived from the silicon monomer are distributed throughout the length of the copolymer chain.

**10.** A copolymer as claimed in claim 8 or claim 9, wherein component (a) is as specified in any one of claims 3 to 5, and/or the silicon monomer is as specified in claim 6.

**11.** An emulsion copolymer containing (a) units derived from vinyl acetate, optionally units derived from a monomer, other than a silicon monomer, copolymerizable therewith and (b) units derived from a silicon monomer, the weight of units (b) being less than 0.25% of the weight of units (a), units derived from vinyl acetate constituting at least 40%, advantageously at least 70% by weight of the copolymer.

**12.** An emulsion paint comprising a copolymer as claimed in any one of claims 8 to 11 or a copolymer dispersion or a copolymer obtainable by the process of any one of claims 1 to 7.

**13.** An emulsion paint comprising as polymeric binder a copolymer of vinyl acetate, optionally a copolymerizable monomer other than a silicon monomer, and from 0.03% to 0.4%, and preferably from 0.2 to 0.4%, based on the total weight of polymer, of a silicon monomer, units derived from vinyl acetate constituting at least 40%, advantageously at least 70%, by weight of the copolymer, and the units derived from the silicon monomer advantageously being distributed throughout the length of the polymer chain.

## Patentansprüche

**1.** Verfahren zur Herstellung einer Polymer-Dispersion, umfassend das Copolymerisieren

(a) eines Vinylesters einer Carbonsäure mit 2 bis 18 Kohlenstoff-Atomen und gegebenenfalls eines copolymerisierbaren Monomers, das kein Silicon-Monomer ist, und
(b) bis zu 0,4 Gew.-%, vorteilhaft weniger als 0,3 Gew.-%, bezogen auf das Gesamtgewicht der Komponente (a), eines Silicon-Monomers

in wäßriger Phase in Gegenwart eines Emulgators, eines Schutzkolloids oder sowohl eines Emulgators als auch eines Schutzkolloids, sowie eines Radikalstarters, wobei wenigstens ein Teil der Komponente (b) zu Beginn der Polymerisation vorhanden ist und der Vinylester wenigstens 40 Gew.-%, vorteilhaft wenigstens 70 Gew.-% der polymerisierbaren Monomer-Mischung ausmacht.

**2.** Verfahren nach Anspruch 1, wobei dieser Teil im wesentlichen gleichzeitig mit der Anfangsbeschickung an Komponente (a), vorteilhaft im Gemisch mit dieser in das wäßrige Polymerisationsmedium eingebracht wird.

**3.** Verfahren nach Anspruch 1 oder 2, wobei der Vinylester Vinylacetat ist.

**4.** Verfahren nach irgendeinem der Ansprüche 1 bis 3, wobei eine Mischung aus Vinylestern, vorteilhaft Vinylacetat und Vinylpropionat oder Vinylacetat und ein Vinylester aus gemischten tertiären $C_{10}$-Carbonsäuren verwendet wird.

**5.** Verfahren nach irgendeinem der Ansprüche 1 bis 4, wobei die Komponente (a) ein oder mehrere copolymerisierbare Monomere umfaßt und das Monomer bzw. die Monomere Butylacrylat, Ethylen oder Ethylen und Vinylchlorid ist bzw. sind.

**6.** Verfahren nach irgendeinem der Ansprüche 1 bis 5, wobei das Silicon-Monomer eine Verbindung der Formel

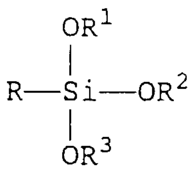

ist, worin R einen Rest mit einer reaktionsfähigen Gruppe bedeutet, vorteilhaft eine ethylenische Doppelbindung, welche die Silicon-Verbindung zur Copolymerisation mit einem ethylenisch ungesättigten Monomer befähigt, und $R^1$, $R^2$ und $R^3$ jeweils unabhängig ein Wasserstoff-Atom, einen Acyl-Rest oder einen unsubstituierten oder Alkoxy-substituierten Alkyl-Rest bedeuten, mit der Maßgabe, daß höchstens zwei der $R^1$, $R^2$ und $R^3$ Wasserstoff bedeuten, wobei das Silicon-Monomer vorteilhaft Vinyltrimethoxysilan, Methacryloxyethyltrimethoxysilan oder Mercaptopropyltrimethoxysilan ist.

**7.** Verfahren nach irgendeinem der Ansprüche 1 bis 6, das in Gegenwart eines anorganischen Persulfats durchgeführt wird.

**8.** Emulsionscopolymer, welches Einheiten enthält, die sich ableiten von

(a) einem Vinylester einer Carbonsäure mit 2 bis 18 Kohlenstoff-Atomen und gegebenenfalls einem copolymerisierbaren Monomer, das kein Silicon-Monomer ist, und
(b) weniger als 0,25 Gew.-%, bezogen auf das Gewicht der von Komponente (a) abgeleiteten Einheiten, an Einheiten, die sich von einem Silicon-Monomer ableiten,

wobei die von dem Vinylester abgeleiteten Einheiten wenigstens 40 Gew.-%, vorteilhaft wenigstens 70 Gew.-% des Copolymers ausmachen.

**9.** Copolymer nach Anspruch 8, worin die vom Silicon-Monomer abgeleiteten Einheiten über die gesamte Länge der Copolymer-Kette verteilt sind.

**10.** Copolymer nach Anspruch 8 oder 9, wobei die Komponente (a) wie in einem der Ansprüche 3 bis 5 angegeben ist und/oder das Silicon-Monomer wie in Anspruch 6 angegeben ist.

**11.** Emulsionscopolymer, enthaltend (a) von Vinylacetat abgeleitete Einheiten, gegebenenfalls von einem damit copolymerisierbaren Monomer abgeleitete Einheiten, das kein Silicon-Monomer ist, und (b) von einem Silicon-Monomer abgeleitete Einheiten, wobei das Gewicht an Einheiten (b) weniger als 0,25 % des Gewichts der Einheiten (a) beträgt und die von Vinylacetat abgeleiteten Einheiten wenigstens 40 Gew.-%, vorteilhaft wenigstens 70 Gew.-

% des Copolymers ausmachen.

**12.** Emulsionsfarbe, umfassend ein Copolymer nach irgendeinem der Ansprüche 8 bis 11 oder eine Copolymer-Dispersion oder ein Copolymer, das mit Hilfe des Verfahrens nach irgendeinem der Ansprüche 1 bis 7 gewonnen werden kann.

**13.** Emulsionsfarbe, umfassend als polymeres Bindemittel ein Copolymer aus Vinylacetat, gegebenenfalls ein copolymerisierbares Monomer, das kein Silicon-Monomer ist, sowie 0,03% bis 0,4%, vorzugsweise 0,2 bis 0,4%, bezogen auf das Gesamtgewicht des Polymers, eines Silicon-Monomers, wobei die von Vinylacetat abgeleiteten Einheiten wenigstens 40 Gew.-%, vorteilhaft wenigstens 70 Gew.-% des Copolymers ausmachen und die vom Silicon-Monomer abgeleiteten Einheiten vorteilhaft über die gesamte Länge der Polymer-Kette verteilt sind.

## Revendications

**1.** Procédé pour la fabrication d'une dispersion de polymères, qui comprend la copolymérisation en phase aqueuse, en présence d'un émulsifiant, d'un colloïde protecteur, ou à la fois d'un émulsifiant et d'un colloïde, et d'un initiateur de radicaux libres,

(a) d'un ester vinylique d'un acide carboxylique ayant de 2 à 18 atomes de carbone, et éventuellement, d'un monomère copolymérisable autre qu'un monomère de silicium, et
(b) de jusqu'à 0,4%, avantageusement moins de 0,3% en poids, sur la base du poids total du composant (a), d'un monomère de silicium, au moins une proportion du composant (b) étant présente au début de la polymérisation, ledit ester vinylique constituant au moins 40%, avantageusement au moins 70% en poids du mélange de monomères polymérisables.

**2.** Procédé selon la revendication 1, dans lequel ladite proportion est introduite sensiblement en même temps que la charge initiale de composant (a), de façon avantageuse en mélange avec celui-ci, dans le milieu aqueux de polymérisation.

**3.** Procédé selon l'une des revendications 1 ou 2, dans lequel l'ester vinylique est l'acétate de vinyle.

**4.** Procédé selon l'une des revendications 1 à 3, dans lequel un mélange d'esters vinyliques, de façon avantageuse d'acétate de vinyle et de propionate de vinyle, ou d'acétate de vinyle et d'un ester vinylique d'un mélange d'acides carboxyliques tertiaires en $C_{10}$, est utilisé.

**5.** Procédé selon l'une des revendications 1 à 4, dans lequel le composant (a) comprend un ou plusieurs monomères copolymérisables et ledit ou lesdits monomères sont l'acrylate de butyle, l'éthylène ou l'éthylène et le chlorure de vinyle.

**6.** Procédé selon l'une des revendications 1 à 5, dans lequel le monomère de silicium est un composé de formule:

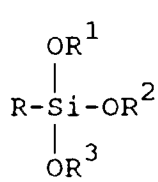

dans laquelle R représente un radical ayant un groupe réactif, avantageusement une double liaison éthylénique, permettant la copolymérisation du composé de silicium avec un monomère éthyléniquement insaturé, et $R^1$, $R^2$ et $R^3$ représentent, chacun indépendamment, un atome d'hydrogène, un radical acyle, un radical alkyle non substitué ou substitué par un radical alcoxy, à condition qu'au plus deux de $R^1$, $R^2$ et $R^3$ représentent un atome d'hydrogène, le monomère de silicium étant avantageusement le vinyl triméthoxysilane, le méthacryloxyéthyl triméthoxysilane ou le mercaptopropyl triméthoxysilane.

**7.** Procédé selon l'une des revendications 1 à 6, réalisé en présence d'un persulfate minéral.

**8.** Copolymère en émulsion contenant des unités dérivées de

(a) un ester vinylique d'un acide carboxylique ayant de 2 à 18 atomes de carbone, et éventuellement, un monomère copolymérisable autre qu'un monomère de silicium, et
(b) moins de 0,25% en poids, sur la base du poids des unités dérivées du composant (a), d'unités dérivées d'un monomère de silicium,

les unités dérivées dudit ester vinylique constituant au moins 40% en poids, de façon avantageuse au moins 70% en poids, du copolymère.

**9.** Copolymère selon la revendication 8, dans lequel les unités dérivées du monomère de silicium sont distribuées sur toute la longueur de la chaîne copolymère.

**10.** Copolymère selon l'une des revendications 8 ou 9, dans lequel le composant (a) est comme spécifié dans l'une des revendications 3 à 5, et/ou le monomère de silicium est tel que spécifié dans la revendication 6.

**11.** Copolymère en émulsion contenant (a) des unités dérivées de l'acétate de vinyle, éventuellement des unités dérivées d'un monomère autre qu'un monomère de silicium, copolymérisable et (b) des unités dérivées d'un monomère de silicium, le poids des unités (b) étant inférieur à 0,25% du poids des unités (a), les unités dérivées de l'acétate de vinyle constituant au moins 40%, avantageusement au moins 70% en poids du copolymère.

**12.** Peinture en émulsion comprenant un copolymère selon l'une des revendications 8 à 11, ou une dispersion de copolymère ou un copolymère susceptible d'être obtenu par le procédé selon l'une des revendications 1 à 7.

**13.** Peinture en émulsion comprenant en tant que liant polymère un copolymère d'acétate de vinyle, éventuellement un monomère copolymérisable autre qu'un monomère de silicium, et de 0,03% à 0,4%, et de préférence de 0,2 à 0,4% par rapport au poids total de polymère, d'un monomère de silicium, les unités dérivées de l'acétate de vinyle constituant au moins 40%, avantageusement au moins 70% en poids du copolymère, et les unités dérivées du monomère de silicium étant avantageusement distribuées sur toute la longueur de la chaîne polymère.